# EUROPÄISCHE PATENTSCHRIFT

(11) **EP 0 492 242 B1**
(45) Veröffentlichungstag und Bekanntmachung des Hinweises auf die Patenterteilung: **05.06.1996**
(21) Anmeldenummer: 91121053.2
(22) Anmeldetag: 09.12.1991
(51) Int. Cl.: F16K 31/06, F16K 31/56

(54) **Magnet-Wegeventil zur Volumenstromsteuerung**
Electromagnetic valve for regulating the fluid flow
Vanne électromagnétique pour commander le débit

(30) Priorität: 28.12.1990 DE 4042084
(43) Veröffentlichungstag der Anmeldung: 01.07.1992
(73) Patentinhaber: Firma J. Eberspächer, D-73730 Esslingen (DE)
(72) Erfinder: Humburg, Michael, Dipl.-Ing., W-7320 Göppingen (DE)

(56) Entgegenhaltungen:
- EP-A- 0 277 055
- FR-A- 2 580 366
- US-A- 4 969 424
- PATENT ABSTRACTS OF JAPAN vol. 10, no. 193 (M-496)(2249) 8. Juli 1986;& JP A 61 038282 (SEISAKUSHO)

## Beschreibung

Die Erfindung bezieht sich auf ein elektrisch schaltendes Magnetventil mit einem in einem Ventilgehäuse geführten Ventilkolben, der mittels eines in einer elektrischen, jeweils nur während eines Schaltvorgangs strombeaufschlagten Spule angeordneten Magnetankers von einer Schaltstellung in eine andere bringbar ist, wobei der Ventilkolben eine Verbindung zwischen mindestens einem Ausgang und einem Eingang des Magnetventils über eine entsprechende Schaltstellung freigibt oder absperrt und in der jeweils erreichten Schaltstellung durch zumindest eine im Ventilgehäuse angeordnete Haltevorrichtung gesichert ist.

Mit einem Elektromagneten bestückte Wegeventile bilden wesentliche Bauteile von zum Steuern und Regeln von Flüssigkeiten bestimmten Anlagen. Im einfachsten Fall sind solche Wegeventile als 2/2-Wegeventile ausgebildet, bei denen die Verbindung zwischen einem Ausgang und einem Eingang des Wegeventils über eine entsprechende Schaltstellung eines Ventildichtelements, in der Regel eines Ventilkolbens, freigegeben oder abgesperrt wird. Die entsprechende An- bzw. Ausstellung des Ventils ist nun über den Elektromagneten derart beeinflußbar, daß bei stromdurchflossenen Elektromagneten der zumindest in einem Teilbereich als Magnetanker ausgebildete Ventilkolben entgegen der Wirkung einer Feder aus einer Schaltstellung in die andere bewegt wird. Bei Abschaltung des Elektromagneten wird der Ventilkolben infolge der Federrückstellkräfte in die ursprüngliche Ausgangsschaltstellung zurückbewegt. Daraus folgt, daß wegen der permanent auf den Ventilkolben einwirkenden Rückstellkräfte der Feder der Ventilkolben zumindest in einer Schaltstellung durch die auf ihn von dem Elektromagneten ausgeübten Kräfte gehalten werden muß, der Elektromagnet also in einer Schaltstellung permanent mit Strom beaufschlagt werden muß, um eine sichere Ventilfunktion zu gewährleisten. Daher kann sich je nach Art und Häufigkeit der Schaltstellung ein beträchtlicher Energieverbrauch für den Elektromagneten ergeben.

Aus FR-A-25 80 366 ist ein elektrisch schaltendes Magnetventil der eingangs genannten Art bekannt, welches insbesondere für eine Wasserberieselungsanlage vorgesehen ist. Bei dem bekannten Magnetventil ist die Haltevorrichtung zur Sicherung des Ventilkolbens in den einzelnen Schaltstellungen als hydraulische Vorrichtung ausgebildet. Bei dieser hydraulischen Vorrichtung wirken in den einzelnen Schaltstellungen jeweils hydraulische Kräfte des das Magnetventil durchströmenden hydraulischen Mediums auf entsprechend dimensionierte hydraulisch wirksame Querschnittsflächen an beiden Seiten der Dichtklappe des Ventilkolbens und auf einen auf der Kolbenstange angeordneten zusätzlichen Kolben derart, daß der Ventilkolben in der jeweiligen Schaltstellung gehalten wird. Die bekannte hydraulische Haltevorrichtung benötigt somit während des Haltevorgangs ständig eine Zufuhr von hydraulischer Energie. Ferner ist es von Nachteil, daß stets dafür Sorge getragen werden muß, daß die zum Halten des Ventilkolbens in den einzelnen Schaltstellungen erforderlichen hydraulischen Kräfte den dabei gegebenen Erfordernissen entsprechen. Dies bedeutet, daß nicht nur die konstruktive Ausbildung der einzelnen hydraulisch wirksamen Flächen dimensionsgerecht eingehalten sein muß, sondern auch, daß die Funktionsweise der hydraulischen Schaltung der das Magnetventil durchsetzenden hydraulischen Ströme einschließlich der hydraulischen Drücke stets wie erforderlich gegeben sein muß. Insbesondere müssen die hydraulischen Drücke in den einzelnen Schaltstellungen während der gesamten Haltedauer auch beständig sein. Soweit diese Forderungen überhaupt sicher realisierbar sind, ergibt sich hierdurch ein entsprechend hoher baulicher Aufwand. Im übrigen besteht die Gefahr des Auftretens von Lecks an den diversen Anschluß- bzw. Verschlußstellen des hydraulischen Systems, so daß die bekannte hydraulische Haltevorrichtung und damit auch das gesamte bekannte Magnetventil eine entsprechend verringerte Funktionssicherheit besitzt.

Ausgehend vom vorgenannten Stand der Technik ist es Aufgabe der Erfindung, ein elektrisch schaltendes Magnetventil der eingangs genannten Art zu schaffen, welches bei Vermeidung der Nachteile bekannter Magnetventile einfach aufgebaut ist und sich unabhängig von der Schaltstellung durch einen geringen Energieverbrauch auszeichnet, gleichwohl aber eine sichere Ventilfunktion insbesondere in jeder Schaltstellung gewährleistet.

Diese Aufgabe wird bei einem Magnetventil nach dem Oberbegriff des Patentanspruchs 1 erfindungsgemäß durch dessen Kennzeichnungsmerkmale gelöst.

Insbesondere dadurch, daß die Haltevorrichtung nach der Erfindung als während des Haltevorgangs ohne Energiezufuhr wirksame mechanische Haltevorrichtung, beispielsweise als entsprechende Zug- oder Blattfederpaar- oder Druckfeder-Anordnung ausgebildet ist, ist das erfindungsgemäße Magnetventil in seiner Konstruktion und Funktionsweise besonders einfach, sicher und energiesparend ausgebildet. Der Erfindung liegt der Gedanke zugrunde, durch die Trennung von Schalt- und Haltefunktion ein elektrisch schaltendes Magnetventil zu schaffen, dessen von einer stromdurchflossenen Spule gebildeter Elektromagnet nur während des eigentlichen Schaltvorgangs elektrische Energie benötigt und die Haltefunktion zum sicheren Halten des Ventilkolbens in einer Schaltstellung durch eine elektrisch unabhängige, gesonderte Haltevorrichtung ermöglicht. Hierzu ist die Spule in einzelne, den jeweils möglichen Schaltstellungen des Magnetventils zugeordnete Spulenbereiche unterteilt. Die so geschaffenen Teilspulen sind unabhängig voneinander elektrisch aktivierbar, so daß der auf den Ventilkolben wirkende Magnetanker sich entsprechend der gerade aktivierten Teilspule ausrichtet und somit sich die zugehörige Schaltstellung des Ventilkolbens einstellt. Nachdem die erwünschte Schaltstellung erreicht ist, kann der Strom abgeschaltet werden, da der Ventilkolben zur Gewährleistung der sicheren Ventilfunktion in der erreichten Schaltstellung durch eine stromunabhängige Haltevorrichtung gehalten wird. Bei der Überführung des Ventilkolbens von einer Schaltstellung in eine andere Schaltstellung wirkt die durch den Elektromagneten auf den Magnetanker des Ventilkolbens ausgeübte Kraft der durch die Haltevorrichtung auf den Ventilkolben ausgeübten Kraft entgegen und bewegt den Ventilkolben in die neue Schaltstellung. In dieser Schaltstellung wird der Ventilkolben dann wieder durch eine entsprechend wirkende Haltevorrichtung gehalten.

Gemäß einer bevorzugten Ausführungsform ist das erfindungsgemäße Magnetventil als 3/2-Wegeventil ausgeführt, wobei die Spule dann zwei den beiden Schaltstellungen des Magnetventils zugeordnete Spulenbereiche aufweist. Zur Ausbildung der beiden Spulenbereiche ist die Spule in zwei elektrisch miteinander verbindbare Teilspulen aufgeteilt, wobei ein einer ersten Schaltstellung zugeordneter Spulenbereich durch eine Teilspule und der der zweiten Schaltstellung zugeordnete Spulenbereich durch die elektrische Verbindung beider Teilspulen gebildet ist. Durch diese "überlappende" Ausbildung der Spulenbereiche wird ein besonders kompakter Aufbau der Spule ermöglicht. Bei der Ausbildung voneinander unabhängiger Spulenbereiche würde sich wegen der zur Erzeugung der magnetischen Kraft notwendigen Mindestgröße der Spulenbereiche eine insgesamt wesentlich größere Spule ergeben.

Nach einem vorteilhaften Merkmal der Erfindung ist die Haltevorrichtung als mechanische Haltevorrichtung ausgeführt. Hierdurch ist die Haltevorrichtung unabhängig von einer äußeren, insbesondere elektrischen Energiezufuhr.

In einer bevorzugten Ausführungsform ist die mechanische Haltevorrichtung im wesentlichen aus einem zwischen dem Ventilgehäuse und dem Ventilkolben wirkenden Federorgan gebildet. Die Anlenkpunkte des Federorgans sind dabei so gewählt, daß das Federorgan beim Verfahren des Ventilkolbens von einer Schaltstellung in eine andere Schaltstellung aus einer stabilen, die jeweilige Schaltstellung fixierende Lage über eine labile Mittellage in eine andere stabile, die neue Schaltstellung sichernde Lage verschwenkt wird. Durch die besondere Art der Anlenkung des Federorgans ist es somit möglich, den Ventilkolben in beiden Schaltstellungen mit nur einer Haltevorrichtung zu sichern.

Das Federorgan kann zur Ausbildung der Haltevorrichtung als Zugfeder ausgeführt sein, die mit ihrem einen Ende am Ventilgehäuse und mit ihrem anderen Ende mit einem am Ventilgehäuse angelenkten Schwenkhebel verbunden ist, der mit seinem freien Ende über eine Gleitsteinverbindung am Ventilkolben angelenkt ist. Hierbei wirkt infolge einer Abweichung der Federausrichtung aus der labilen Mittellage die Federkraft auf den Schwenkhebel, so daß das infolge der Anlenkung des Schwenkhebels am Ventilgehäuse entstehende Hebelmoment zur Sicherung des Ventilkolbens in einer Schaltstellung dient. Bei dieser Ausführungsform der mechanischen Haltevorrichtung wird durch die Wirkung des Schwenkhebels die Verwendung einer einfachen Zugfeder als zur Sicherung beider Schaltstellungen dienendes Federorgan ermöglicht.

Bei einer Variante der mechanischen Haltevorrichtung besteht das Federorgan aus zwei gegensinnig angeordneten, jeweils mit ihren Enden an einem gemeinsamen Anlenkpunkt am Ventilgehäuse sowie am Ventilkolben angelenkten Blattfedern. Hierdurch ist eine vorteilhafte Möglichkeit gegeben, die Haltevorrichtung mit einem möglichst einfachen Aufbau zu versehen, der dennoch eine betriebssichere Funktion garantiert.

Eine weitere Ausführungsmöglichkeit der mechanischen Haltevorrichtung besteht in der Verwendung einer Druckfeder als Federorgan. Dabei ist dann die Aufnahme der Druckfeder in einer Knickhülse erforderlich, um ein Ausknicken der Druckfeder zu verhindern und somit die erforderliche Funktion der Haltevorrichtung sicherzustellen.

Zur wahlweisen Aktivierung einer der beiden Teilspulen des Magnetventils ist ein elektrischer Schaltungsaufbau vorgesehen, bei dem die Spule je nach gewünschter Schaltstellung mit einer oder beiden Teilspulen in einem Schaltkreis integriert ist. Der Schaltkreis weist neben einer Spannungsquelle einen Wechselschalter und einen Tastschalter auf, wobei der Wechselschalter die wahlweise Aktivierung einer oder beider Teilspulen ermöglicht und der Tastschalter das für die Funktion des Magnetventils ausreichende, kurzzeitige Schließen des Stromkreises ermöglicht.

Bei Ausstattung des erfindungsgemäßen Magnetventils mit zwei Eingängen und einem Ausgang ergibt sich die Möglichkeit der Verwendung des Magnetventils zur Steuerung von Kühlmittelflüssen in einem mit einem Heizgerät versehenen Kühlmittelkreislauf eines Verbrennungsmotors für Kraftfahrzeuge. Hierbei kann das erfindungsgemäße Magnetfeld dann zur wahlweisen Steuerung des durch das Heizgerät aufgeheizten Kühlmittelflusses durch den Verbrennungsmotor oder durch eine den Verbrennungsmotor umgehende Bypassleitung dienen. Das erfindungsgemäße Magnetventil ermöglicht somit eine - abgesehen von den eigentlichen Schaltvorgängen - Steuerung des Kühlmittelflusses ohne Zufuhr elektrischer Energie. Dies ist besonders wichtig bei dem Einsatz des Magnetventils in Kraftfahrzeugen, da hier in der Regel zur Energieversorgung nur die begrenzte elektrische Kapazität der Fahrzeugbatterie zur Verfügung steht.

Als besonders vorteilhaft erweist sich der Einsatz des erfindungsgemäßen Magnetventils in als Fernlastzügen eingesetzten LKW. Bei diesen in aller Regel mit einer Schlafkabine versehenen LKW ist eine permanente Steuerung des Kühlmittelstroms zur ausschließlichen Beheizung des Fahrzeuginnenraums während eines langandauernden Zeitraums (z.B. einer Übernachtung) notwendig. Wird zur entsprechenden Volumenstromsteuerung das erfindungsgemäße Magnetventil eingesetzt, wird die Fahrzeugbatterie unabhängig von der Schaltstellung des Magnetventils nicht belastet.

Darüber hinaus ist es auch möglich, das erfindungsgemäße Magnetventil als Thermostatventil auszuführen, wobei dann der Ventilkolben als Ventil-Dehnstoffelement ausgeführt ist. Durch die erfindungsgemäß unabhängig mit Strom beaufschlagbaren Teilspulen der Spule des Magnetventils ist das Thermostatventil unabhängig von der Situation des Ventil-Dehnstoffelements in zwei Endstellungen bringbar. Somit kann bei Bedarf unabhängig von der Regeltemperatur des Thermostatventils, etwa wenn der Kühlmittelstrom ausschließlich durch den Verbrennungsmotor oder durch den Verbrennungsmotor umgehende Bypassleitung geführt werden soll, eine übersteuerung des Thermostatventils erfolgen.

Die Erfindung sowie bevorzugte Ausgestaltungen der Erfindung werden nachfolgend anhand von Ausführungsbeispielen näher erläutert. Es zeigen:
- Fig. 1: ein als 3/2-Wegeventil ausgeführtes Magnetventil,
- Fig. 2: eine Darstellung des elektrischen Schaltschemas zum Betrieb des gemäß Fig. 1 im Magnetventil eingesetzten Elektromagneten,
- Fig. 3: eine Prinzipdarstellung einer im Magnetventil gemäß Fig. 1 eingesetzten, mit einer Zugfeder versehenen Haltevorrichtung,
- Fig. 4: eine Prinzipdarstellung einer mit einem Blattfederpaar versehenen Haltevorrichtung,
- Fig. 5: eine Prinzipdarstellung einer mit einer Druckfederanordnung versehenen Haltevorrichtung, und
- Fig. 6: eine schematische Darsteilung eines beheizbaren Kühlmittelkreislaufs eines Kraftfahrzeugs mit einem Magnetventil nach der Erfindung.

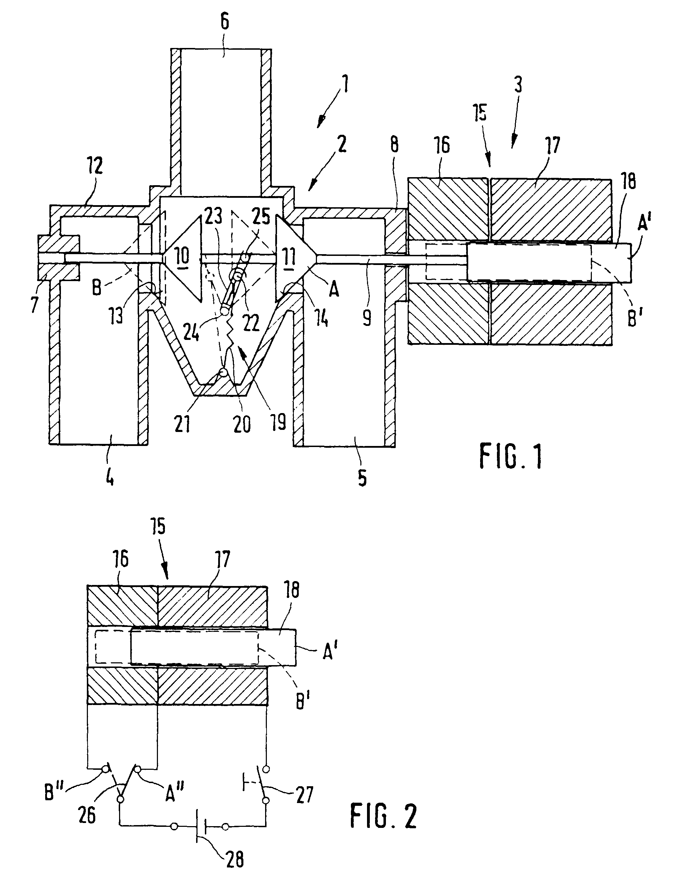

Fig. 1 zeigt ein Magnetventil 1, das im wesentlichen aus einem 3/2-Wegeventil 2 mit einem daran angeflanschten Elektromagneten 3 besteht. Das 3/2-Wegeventil 2 weist zwei mögliche Schaltstellungen A und B auf, die zur wahlweisen Verbindung jeweils eines Eingangs 4 oder 5 mit einem Ausgang 6 dienen. Die Schaltstellungen A und B werden durch eine entsprechende Lageänderung eines im 3/2-Wegeventil 2 in Lagerstellen 7 und 8 geführten Ventilkolbens 9 erreicht. Der Ventilkolben 9 ist als Doppelventilkolben ausgeführt und weist zwei Dichtkegel 10, 11 auf, die zur dichtenden Anlage an im Ventilgehäuse 12 angeordneten Kegelsitzen 13, 14 dienen.

In der Schaltstellung A dichtet der Ventilkolben 9 durch Anlage seines Dichtkegels 11 im Kegelsitz 14 den Eingang 5 des 3/2-Wegeventils 2 gegen dessen Ausgang 6 ab. In dieser Schaltstellung ist der Ventilweg zwischen dem Eingang 4 und dem Ausgang 6 freigegeben, so daß ein durch den Eingang 4 in das 3/2-Wegeventil einströmendes Medium das Ventil durch den Ausgang 6 verlassen kann. Die Schaltstellung B des Ventils ist in Fig. 1 vereinfacht dargestellt durch eine gestrichelte Darstellung der Position, die die Dichtkegel 10, 11 in der Schaltstellung B einnehmen. In der Schaltstellung B ist demnach der Eingang 4 durch dichtende Anlage des Dichtkegels 10 im Kegelsitz 14 gegenüber dem Ausgang 6 geschlossen, so daß eine freie Verbindung zwischen dem Eingang 5 und dem Ausgang 6 gegeben ist.

Realisiert werden die Schaltstellungen A und B durch eine entsprechende Bestromung des Elektromagneten 3. Der Elektromagnet 3 besteht im wesentlichen aus einer Spule 15, die in zwei Teilspulen 16, 17 aufgeteilt ist. Im Innern der Spule 15 ist der als Magnetanker 18 ausgebildete spulenseitige Endbereich des Ventilkolbens 9 angeordnet. Bei einer Bestromung der Teilspule 17 oder einer Bestromung der aus der Teilspule 16 und der Teilspule 17 gebildeten Gesamtspule richtet sich infolge des entstehenden Magnetfeldes der Magnetanker 18 jeweils mittig zu dem bestromten Spulenbereich aus. Zum Erreichen der Schaltstellung A des Ventilkolbens 9 erfolgt lediglich eine Bestromung der Teilspule 17. Als Folge hiervon richtet sich der Magnetanker 18 in der mit A' gekennzeichneten Position aus, in der er entsprechend dem so im Magnetfeld der Teilspule 17 gebildeten Kräftegleichgewicht mittig zu dieser angeordnet ist. Mit der Schaltstellung B des Ventilkolbens 9 korrespondiert die Position B' des Magnetankers 18. Diese Ausrichtung des Magnetankers 18 ergibt sich infolge der Bestromung der aus den Teilspulen 16 und 17 gebildeten Gesamtspule 15.

Um nach Erreichen der Schaltstellung A oder B infolge entsprechender Bestromung der Teilspule 17 oder der aus den Teilspulen 16 und 17 gebildeten Gesamtspule 15 eine Unterbrechung der Stromzufuhr zu ermöglichen, ist eine Haltevorrichtung 19 vorgesehen, die den Ventilkolben 9 zum Verbleib in der erreichten Schaltstellung A oder B zwingt und die nötige Dichtkraft auf den Dichtkegel 10 oder 11 zur sicheren Abdichtung der Kegelsitze 13, 14 ausübt. Die Haltevorrichtung 19 besteht im wesentlichen aus einer Zugfeder 20, die mit ihrem einen Ende in einem Anlenkpunkt 21 mit dem Ventilgehäuse 12 und mit ihrem anderen Ende an einem Zapfen 22 eines Schwenkhebels 23 angelenkt ist. Der Schwenkhebel 23 ist mit einem Ende schwenkbar auf einer senkrecht zur Zeichenebene im Ventilgehäuse 12 angeordneten Schwenkachse 24 gelagert. Mit seinem anderen Ende ist der gabelförmig auslaufende Schwenkhebel 23 nach Art einer Gleitsteinverbindung auf einem Zapfen 25 des Ventilkolbens 9 geführt.

Durch die auf den Zapfen 22 wirkende Zugkraft der Feder 20 wirkt um die Achse 24 ein Moment, das den Ventilkolben 9 in der Position A sichert, ohne daß hierzu eine magnetische, durch die Teilspule 17 erzeugte Haltekraft notwendig wäre. Der Posititon A des Ventilkolbens 9 bzw. des Dichtkegels 11 entspricht die Position A' des Magnetankers 18.

Die Stromzufuhr kann unterbrochen werden, da die für die Dichtwirkung erforderliche Anpreßkraft auf den Dichtkegel 11 allein durch die Haltevorichtung 19 aufgebracht wird.

Beim Umschalten des Ventilkolbens 9 in die Schaltstellung B wird die aus den Teilspulen 16 und 17 gebildete Gesamtspule mit Strom beaufschlagt, so daß sich der Magnetanker 18 entsprechend der Position B' ausrichtet. Dabei wirken die durch das Magnetfeld auf den Magnetanker 18 ausgeübten Kräfte der Anpreßkraft der Haltevorrichtung 19 entgegen, mit der Folge, daß die Haltevorrichtung 19 beim Umschalten in die durch gestrichelte Linien dargestellte Position umschlägt. Nachdem diese Position errreicht ist, kann dann wieder die Stromzufuhr zur Spule 15 unterbrochen werden, da der Dichtkegel 10 des Ventilkolbens 9 allein durch die nunmehr in ihrem Richtungssinn umgekehrte Anpreßkraft in den Kegelsitz 13 gepreßt wird.

Fig. 2 zeigt die Darstellung eines Schaltungsschemas zur teilweisen oder gesamten Bestromung der Spule 15. Neben der Spule 15 weist das Schaltungsschema als wesentliche Bauelemente einen Wechselschalter 26, einen Tastschalter 27 und eine Spannungsquelle 28 auf. In der mit A" gekennzeichneten Schalterstellung des Wechselschalters 26 erfolgt lediglich eine Bestromung der Teilspule 17. Hierdurch ergibt sich die Position A' des Magnetankers 18, die, wie anhand der Fig. 1 bereits ausführlich erläutert wurde, der Schaltstellung A des Ventilkolbens 9 entspricht. Wird der Wechselschalter 26 hingegen umgelegt und befindet sich nunmehr in der Schalterstellung B'', ergibt sich eine Bestromung der gesamten aus den Teilspulen 16 und 17 gebildeten Spule 15. Dies wiederum hat die Ausrichtung des Magnetankers 18 gemäß der Position B' zur Folge, die der Schaltstellung B des Ventilkolbens 9 entspricht. Die genannten Positionierungen A' und B' des Magnetankers 18 sind natürlich nur bei geschlossenem Tastschalter 27 möglich. Zum Schließen des Stromkreises eignet sich ein Tastschalter oder ein in der Wirkung ähnliches Schaltungsglied, da, wie bei den Erläuterungen zu Fig. 1 bereits ausführlich dargelegt wurde, das Schließen des Stromkreises jeweils nur kurzzeitig erfolgen muß, um den Ventilkolben 9 von einer Schaltstellung in die andere zu befördern. Das Halten des Ventilkolbens 9 in der jeweiligen Schaltstellung erfolgt allein durch die Haltevorrichtung 19.

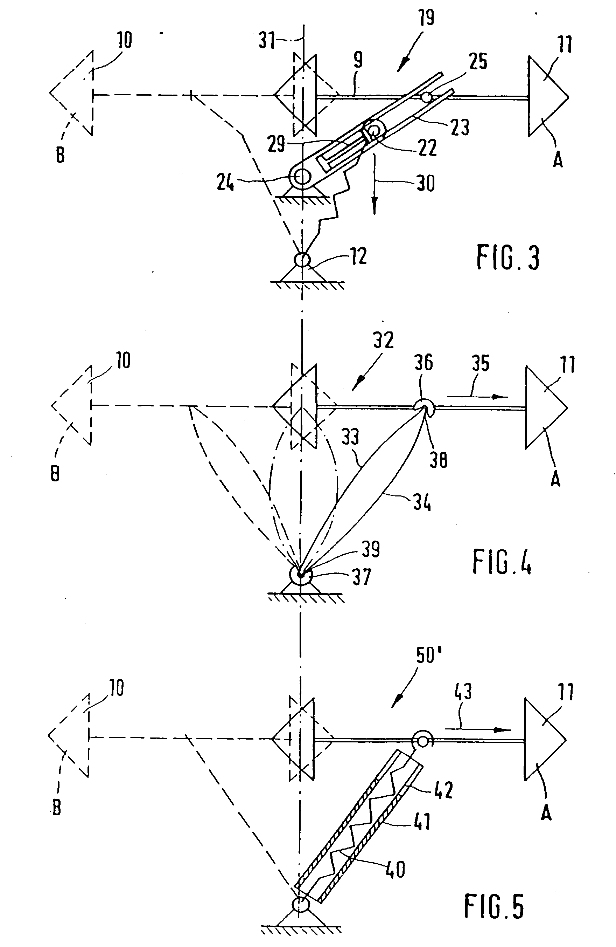

In den Fig. 3 bis 5 sind unterschiedlich aufgebaute, in ihrer Funktion jedoch übereinstimmende Haltevorrichtungen dargestellt. Fig. 3 zeigt noch einmal in stark schematisierter Darstellung die im wesentlichen aus der Zugfeder 20 und dem Schwenkhebel 23 aufgebaute Haltevorrichtung 19. Die Anlenkung des Schenkhebels 23 an die Schwenkachse 24 und die Anlenkung der Zugfeder 20 an das Ventilgehäuse 12 sind hier durch entsprechende Lagersymbole dargestellt. Teil des Schwenkhebels 23 ist ein einstellbares Distanzglied 29, das sich mit seinem unteren Ende am Schwenkhebel 23 abstützt.

Auf dem oberen Ende des Distanzgliedes 29 liegt der Zapfen 22 auf, an dem die Zugfeder 20 angelenkt ist und in dem eine senkrecht wirkende, ein Moment um die Schwenkachse 24 bewirkende Zugkraftkomponente 30 der Zugfederkraft angreift. Beim Umschlagen der Haltevorrichtung 19 infolge der Überführung des Ventilkolbens 9 von der Schaltstellung A in die Schaltstellung B passiert die Haltevorrichtung 19 eine Mittellage, die durch einen labilen Gleichgewichtszustand gekennzeichnet ist. In dieser Mittellage fluchten die maximal ausgedehnte Zugfeder 20 und der Schwenkhebel 23 auf einer gemeinsamen Achse 31. Bei Annäherung der Haltevorrichtung 19 ausgehend von der Schaltstellung A an die durch die Achse 31 gekennzeichnete Mittellage wird das um die Schwenkachse 24 wirkende Moment zunehmend kleiner und geht gegen Null. Nach überwindung der Mittellage erfolgt dann wieder eine stetige Zunahme des durch die Kraftkomponente 30 erzeugten Moments, was zu der beschriebenen Sicherung des Ventilkolbens 9 in der Schaltstellung B führt.

Anhand der in Fig. 3 dargestellten Prinzipskizze, die die kinematischen Vorgänge zwischen den Bauteilen der Haltevorrichtung 19 während des übergangs von-einer Schaltstellung in die andere zeigt, wird deutlich, daß exakt betrachtet die von dem Elektromagneten 3 auf den Ventilkolben 9 ausgeübte Kraft sogar nur während des halben Schaltweges, nämlich zur überführung des Ventilkolbens 9 von einer Schaltstellung in die Mittellage notwendig ist. Hieraus ergibt sich, daß die Bestromung des Elektromagneten 3 nur während eines extrem kurzen Zeitraumes notwendig ist, was wiederum einen entsprechend niedrigen Energiebedarf zur Folge hat.

Fig. 4 zeigt eine Haltevorrichtung 32, bei der zwei gegensinnig angeordnete Blattfedern 33 und 34 verwendet werden. Die gegensinnige Anordnung einer gleichen Anzahl von Blattfedern ist notwendig, wenn man in beiden Schaltstellungen A und B gleiche, lediglich mit entgegengesetzten Vorzeichen auf den Dichtkegel 10 bzw. 11 wirkende Kräfte erzielen will. Da die Blattfedern 33, 34 im wesentlichen eine Druckkraft auf den Ventilkolben 9 ausüben, bedarf es in diesem Fall keiner Kraftumlenkung (wie in Fig. 3 durch die Wirkung des Schwenkhebels 23 geschehen), um eine den Dichtkegel 11 in der Schaltstellung A in den Kegelsitz 14 pressende Kraftkomponente 35 zu erzeugen. Die strichpunktierte Darstellung zeigt die Blattfeder 33, 34 in der längs der Achse 31 verlaufenden Mittellage und die gestrichelte Darstellung zeigt die Anordnung der Blattfedern 33, 34 in der Schaltstellung B. Zur sicheren Aufnahme der Blattfederenden ist bei diesem Ausführungsbeispiel jeweils am Ventilkolben 9 und am Ventilgehäuse 12 ein mitschwenkender Zapfen 36, 37 angeordnet, der mit einer Aufnahmekerbe 38, 39 zur führenden Aufnahme der Blattfederenden versehen ist.

Fig. 5 zeigt eine Haltevorrichtung 50', die im wesentlichen aus einer Druckfeder 40 gebildet ist, die zum Verhindern eines Ausknickens von einer Knickhülse 41 aufgenommen wird. Die Knickhülse 41 weist in ihrem oberen Endbereich einen Einschnitt 42 auf, der so bemessen ist, daß es beim Durchschwenken der Mittellage nicht zu einer Kollision mit dem Ventilkolben 9 kommt. Bei Verwendung der Druckfeder 40 ergibt sich ebenso wie im vorherigen Ausführungsbeispiel unmittelbar eine auf den Dichtkegel 11 wirkende Kraftkomponente 43.

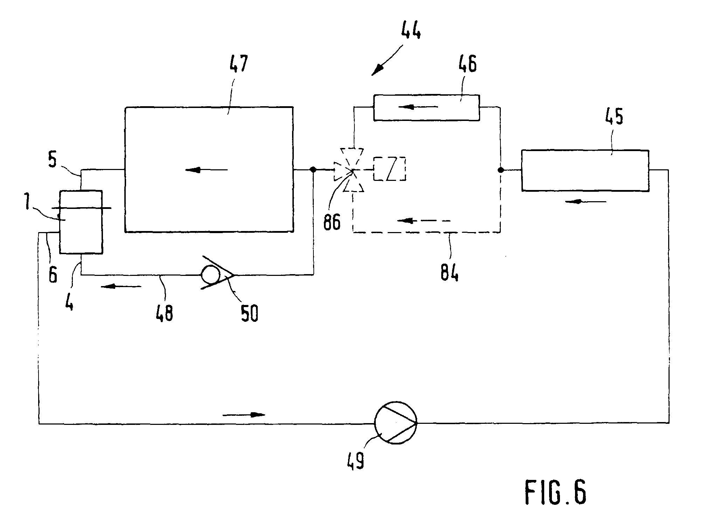

Fig. 6 zeigt die Verwendung des Magnetventils 1 in einem beheizbaren Kühlmittelkreislauf 44 eines Kraftfahrzeuges. Der in Fig. 6 gezeichnete Kühlmittelkreislauf 44 weist, beginnend mit einem Heizgerät 45, im wesentlichen die folgenden kreislaufleitungsmäßig miteinander verbundenen Komponenten auf: das Heizgerät 45 mit darin vorhandenem Verbrennungsgas/Kühlmittelwärmetausch, einen Kühlmittel/Luft-Wärmetauscher 46 für einen Fahrzeuginnenraum, einen Verbrennungsmotor 47, eine an dem Verbrennungsmotor 47 vorbeiführende Bypassleitung 48 mit darin angeordnetem Rückschlagventil 50, das Magnetventil 1 an der Wiedereinmündung der Bypassleitung 48 hinter dem Motor 47 in den Kühlmittelkreislauf 44, sowie eine im Rücklauf angeordnete Wasserpumpe 49. Der Kühlmittelkreislauf 44 wird im Betrieb in der soeben abgehandelten Reihenfolge von Kühlmittel, normalerweise Wasser oder einem Wasserglykol-Gemisch, durchströmt.

Je nach Schaltstellung ermöglicht das Magnetventil 1, daß das Kühlmittel insgesamt den Verbrennungsmotor 47 durchströmt, etwa zur schnellstmöglichem Erwärmung des Motors unter Kaltstartbedingung, oder daß das Kühlmittel den Verbrennungsmotor 47 vollständig umgeht durch Öffnung des Ventilweges zwischen dem Eingang 4 des Mangnetventils 1 und dessen Ausgang 6, etwa zur ausschließlichen Beheizung des Fahrzeuginnenraums über den Kühlmittel/Luft-Wärmetauscher 46.

Natürlich ist es auch möglich, in dem vorstehend beschriebenen Verwendungsbeispiel für das erfindungsgemäße Magnetventil 1 den Ventilkolben 9 des Magnetventils 1 als an sich bekanntes Ventil-Dehnstoffelement auszuführen. Hierdurch ist dann bei Nichtbetätigung des Magnetventils 1 ein normal arbeitendes Thermostatventil gegeben, wobei die Option offenbleibt, durch Betätigung des Magnetventils 1 das Thermostatventil zu übersteuern und unabhängig vom Regelbereich des Thermostatventils bei Bedarf durch eine entsprechende Schaltstellung des Magnetventils 1 eine ausschließliche Durchströmung des Verbrennungsmotors 47 oder der Bypassleitung 48 zu gewährleisten.

Ferner ist eine den Kühlmittel/Luft-Wärmetauscher 46 umgehende Bypassleitung 84 eingezeichnet, die über ein 3/2-Wegeventil 86 in den restlichen Kühlmittelkreislauf 44 einmündet. Durch das Ventil 86 kann die den Wärmetauscher 46 durchströmende Kühlmittelmenge eingestellt werden.

## Patentansprüche

1. Elektrisch schaltendes Magnetventil (1) mit einem in einem Ventilgehäuse (12) geführten Ventilkolben (9), der mittels eines in einer elektrischen, jeweils nur während eines Schaltvorgangs strombeaufschlagten Spule (3, 15) angeordneten Magnetankers (18) von einer Schaltstellung in eine andere bringbar ist, wobei der Ventilkolben (9) eine Verbindung zwischen mindestens einem Ausgang (6) und einem Eingang (4, 5) des Magnetventils (1) über eine entsprechende Schaltstellung freigibt oder absperrt und in der jeweils erreichten Schaltstellung durch zumindest eine im Ventilgehäuse (12) angeordnete Haltevorrichtung (19, 12, 50) gesichert ist,
dadurch gekennzeichnet,
daß die Spule (3, 15) den verschiedenen Schaltstellungen des Magnetventils (1) zugeordnete Spulenbereiche (16, 17) aufweist und die Haltevorrichtung (19, 32, 50) als während des Haltevorgangs ohne Energiezufuhr wirksame mechanische Vorrichtung (19, 32, 50) ausgebildet ist.

2. Magnetventil nach Anspruch 1, dadurch gekennzeichnet, daß das Magnetventil (1) als 3/2-Wegeventil ausgeführt ist und die Spule (3, 15) zwei den beiden Schaltstellungen des Magnetventils (1) zugeordnete Spulenbereiche (16, 17) aufweist.

3. Magnetventil nach Anspruch 1 oder 2, dadurch gekennzeichnet, daß die Spule (3, 15) zwei elektrisch miteinander koppelbare Teilspulen (16, 17) aufweist, wobei ein einer ersten Schaltstellung zugeordneter Spulenbereich durch eine Teilspule (17) und der der zweiten Schaltstellung zugeordnete Spulenbereich durch die elektrische Verbindung beider Teilspulen (16, 17) gebildet ist.

4. Magnetventil nach Anspruch 3 sowie einem oder mehreren der weiteren Ansprüche, dadurch gekennzeichnet, daß die Haltevorrichtung (19, 32, 50) im wesentlichen aus einem zwischen dem Ventilgehäuse (12) und dem Ventilkolben (9) wirkenden Federorgan (20, 33, 34, 40) besteht, dessen Anlenkpunkte so gewählt sind, daß das Federorgan (20, 33, 34, 40) beim Verfahren des Ventilkolbens (9) von einer Schaltstellung in eine andere Schaltstellung aus einer stabilen, die jeweilige Schaltstellung fixierende Lage über eine labile Mittellage in eine andere stabile, die Schaltstellung sichernde Lage bringbar ist.

5. Magnetventil nach Anspruch 4 sowie einem oder mehreren der weiteren Ansprüche, dadurch gekennzeichnet, daß das Federorgan als Zugfeder (20) ausgebildet ist, die mit ihrem einen Ende am Ventilgehäuse (12) und mit ihrem Ende mit einem am Ventilgehäuse (12) angelenkten Schwenkhebel (23) verbunden ist, der mit seinem freien Ende über eine Gleitsteinverbindung (23, 25) am Ventilkolben (9) angelenkt ist.

6. Magnetventil nach Anspruch 4 sowie einem oder mehreren der weiteren Ansprüche, dadurch gekennzeichnet, daß das Federorgan aus zwei gegensinnig angeordneten, jeweils mit ihren Enden an einem im wesentlichen gemeinsamen Anlenkpunkt am Ventilgehäuse (12) sowie am Ventilkolben (9) angelenkten Blattfedern (33, 34) besteht.

7. Magnetventil nach Anspruch 4 sowie einem oder mehreren der weiteren Ansprüche, dadurch gekennzeichnet, daß das Federorgan als Druckfeder (40) ausgebildet ist, die in einer Knickhülse (41) angeordnet ist.

8. Magnetventil nach einem oder mehreren der vorangehenden Ansprüche, dadurch gekennzeichnet, daß die Spule (3, 15) zur wahlweisen Aktivierung einer oder beider Teilspulen (16, 17) mit einer oder beiden Teilspulen (16, 17) in einen Schaltkreis integrierbar ist, der neben einer Spannungsquelle (28) im wesentlichen einen Wechselschalter (26) und einen Tastschalter (27) aufweist.

9. Magnetventil nach einem oder mehreren der vorangegangenen Ansprüche, dadurch gekennzeichnet, daß das Magnetventil (1) mit zwei Eingängen (4, 5) und einem Ausgang (6) versehen ist.

10. Magnetventil nach einem oder mehreren der vorangehenden Ansprüche, gekennzeichnet durch die Verwendung zur Steuerung von Kühlmittelflüssen in einem mit einem Heizgerät (45) versehenen Kühlmittelkreislauf (44) eines Verbrennungsmotors (47) für ein Kraftfahrzeug.

11. Magnetventil nach Anspruch 10, gekennzeichnet durch eine Ausführung als Thermostatventil, wobei der Ventilkolben (9) als Ventil-Dehnstoffelement ausgeführt ist und das Thermostatventil durch die unabhängig voneinander mit Strom beaufschlagbaren Teilspulen (16, 17) der Spule (3, 15) unabhängig von der Situation des Ventil-Dehnstoffelements in zwei Endstellungen bringbar ist.

## Claims

1. An electrically switching solenoid valve (1) having a valve piston (9) which is guided in a valve housing (12) and may be brought from one switch position into another by means of a magnet armature (18) which is arranged in an electrical coil (3, 15) which is in each case only acted upon by current during a switching procedure, the valve piston (9) freeing or blocking a connection between at least one output (6) and an input (4, 5) of the solenoid valve (1) by way of a corresponding switch position, and being secured in the switch position reached in each case by at least one holding apparatus (19, 12, 50) arranged in the valve housing (12), characterized in that the coil (3, 15) has coil regions (16, 17) associated with the different switch positions of the solenoid valve (1) and the holding apparatus (19, 32, 50) is constructed as a mechanical apparatus (19, 32, 50) which is active without the supply of energy during the holding procedure.

2. A solenoid valve according to Claim 1, characterized in that the solenoid valve (1) is constructed as a 3/2-way valve and the coil (3, 15) has two coil regions (16, 17) associated with the two switch positions of the solenoid valve (1).

3. A solenoid valve according to Claim 1 or 2, characterized in that the coil (3, 15) has two part coils (16, 17) which may be coupled electrically to one another, a coil region associated with a first switch position being formed by a part coil (17) and that of the coil region associated with the second switch position being formed by the electrical connection of the two part coils (16, 17).

4. A solenoid valve according to Claim 3 and one or more of the other claims, characterized in that the holding apparatus (19, 32, 50) substantially comprises a spring member (20, 33, 34, 40) which acts between the valve housing (12) and the valve piston (9) and whereof the articulation points are selected such that when the valve piston (9) moves from one switch position into another switch position the spring member (20, 33, 34, 40) may be brought from a stable condition fixing the respective switch position, through an unstable central position, into another stable condition fixing the switch position.

5. A solenoid valve according to Claim 4 and one or more of the other claims, characterized in that the spring member is constructed as a tension spring (20) which is connected by its one end to the valve housing (12) and by its other end to a pivotal lever (23) articulated to the valve housing (12), this pivotal lever (23) being articulated by its free end by way of a sliding block connection (23, 25) to the valve piston (9).

6. A solenoid valve according to Claim 4 and one or more of the other claims, characterized in that the spring member comprises two leaf springs (33, 34) which are arranged in opposing directions and are each articulated by their ends to a substantially common articulation point on the valve housing (12) and to the valve piston (9).

7. A solenoid valve according to Claim 4 and one or more of the other claims, characterized in that the spring member is constructed as a compression spring (40) arranged in a flexing sleeve (41).

8. A solenoid valve according to one or more of the other claims, characterized in that the coil (3, 15) may be integrated, for the purpose of selectively activating one or both part coils (16, 17), with one or both part coils (16, 17) in a circuit which, in addition to a voltage source (28), substantially has a two-way switch (26) and a touch contact switch (27).

9. A solenoid valve according to one or more of the preceding claims, characterized in that the solenoid valve (1) is provided with two inputs (4, 5) and one output (6).

10. A solenoid valve according to one or more of the preceding claims, characterized by the use of an internal combustion engine (47) for a motor vehicle for controlling coolant flows in a coolant circuit (44) provided with a heating device (45).

11. A solenoid valve according to Claim 10, characterized by a construction as a thermostat valve, the valve piston (9) being constructed as a valve expansion-material element and it being possible to bring the thermostat valve into two end positions as a result of the part coils (16, 17) of the coil (3, 15), which may be acted upon with current independently of one another, independently of the situation of the valve expansion-material element.

## Revendications

1. Electrovalve (1) comprenant un piston de valve (9) qui est guidé dans un carter de valve (12) et qui peut être amené d'une position de commutation à une autre au moyen d'une armature magnétique (18), celle-ci étant disposée dans une bobine électrique (3, 15) qui n'est à chaque fois alimentée en courant que pendant un processus de commutation, cependant que le piston de valve (9) libère ou ferme une liaison entre au moins une sortie (6) et une entrée (4, 5) de l'électrovalve (1) par l'intermédiaire d'une position de commutation correspondante, et qu'il est bloqué dans la position de commutation qui a été atteinte à chaque fois par au moins un dispositif de retenue (19, 32, 50 ) disposé dans le carter (12) de la valve, caractérisée par le fait que la bobine (3, 15) présente des zones de bobine (16, 17) qui sont associées aux diverses positions de commutation de l'électrovalve (1), et que le dispositif de retenue (19, 32, 50 ) est réalisé sous la forme d'un dispositif mécanique (19, 32, 50 ) qui agit sans apport d'énergie pendant le processus de commutation.

2. Electrovalve selon la revendication 1, caractérisée par le fait que l'électrovalve (1) est réalisée sous la forme d'une valve à trois voies et à deux positions, et que la bobine (3, 15) présente deux zones de bobine (16, 17) qui sont associées aux deux positions de commutation de l'électrovalve (1).

3. Electrovalve selon la revendication 1 ou 2, caractérisée par le fait que la bobine (3, 15) présente deux bobines partielles (16, 17) qui peuvent être couplées entre elles électriquement, une zone de bobine associée à une première position de commutation étant constituée par une bobine partielle (17), et la zone de bobine qui est associée à la deuxième position de commutation étant constituée par les deux bobines partielles (16, 17) reliées électriquement.

4. Electrovalve selon la revendication 3, ainsi que selon une ou plusieurs des autres revendications, caractérisée par le fait que le dispositif de retenue (19, 32, 50 ) est constitué pour l'essentiel par un organe élastique (20, 33, 34, 40) qui agit entre le carter (12) de la valve et le piston de valve (9) et dont les points d'articulation sont choisis d'une manière telle que, lors du déplacement du piston de valve (9) d'une position de commutation à une autre position de commutation, l'organe élastique (20, 33, 34, 40) puisse être amené d'une position stable qui fixe la position de commutation correspondante à une autre position stable qui bloque la position de commutation, et ce, en passant par une position centrale instable.

5. Electrovalve selon la revendication 4, ainsi que selon une ou plusieurs des autres revendications, caractérisée par le fait que l'organe élastique est réalisé sous la forme d'un ressort de traction (20), celui-ci étant relié par l'une de ses extrémités au carter (12) de la valve et par son autre extrémité à un levier pivotant (23) qui est articulé sur le carter (12) de la valve et qui est articulé par son extrémité libre sur le piston de valve (9) par l'intermédiaire d'une liaison par coulisseau (23, 25).

6. Electrovalve selon la revendication 4, ainsi que selon une ou plusieurs des autres revendications, caractérisée par le fait que l'organe élastique est constitué par deux lames de ressort (33, 34) qui sont disposées dans des sens opposés et qui sont articulées par leurs extrémités sur le carter (12) de la valve, ainsi que sur le piston de valve (9), à chaque fois en un point d'articulation qui leur est commun pour l'essentiel.

7. Electrovalve selon la revendication 4, ainsi que selon une ou plusieurs des autres revendications, caractérisée par le fait que l'organe élastique est réalisé sous la forme d'un ressort de compression (40) qui est disposé dans un manchon antiflambage (41).

8. Electrovalve selon une ou plusieurs des revendications précédentes, caractérisée par le fait qu'en vue de l'activation au choix de l'une des bobines partielles (16, 17) ou des deux, la bobine (3, 15) peut être intégrée par l'une des bobines partielles (16, 17) ou par les deux dans un circuit qui comporte pour l'essentiel, outre une source de tension (28), un commutateur inverseur (26) et un interrupteur à poussoir (27).

9. Electrovalve selon une ou plusieurs des revendications précédentes, caractérisée par le fait que l'électrovalve (1) est pourvue de deux entrées (4, 5) et d'une sortie (6).

10. Electrovalve selon une ou plusieurs des revendications précédentes, caractérisée par son utilisation pour commander des flux de fluide de refroidissement dans un circuit de fluide de refroidissement (44) qui est pourvu d'un appareil de chauffage (45) et qui appartient à un moteur à combustion interne (47) destiné à un véhicule automobile.

11. Electrovalve selon la revendication 10, caractérisée par une réalisation sous la forme d'une valve thermostatique, le piston de valve (9) étant réalisé sous la forme d'un élément de valve expansible et la valve thermostatique pouvant être amenée dans deux positions finales par les bobines partielles (16, 17) de la bobine (3, 15) qui peuvent être alimentées en courant indépendamment l'une de l'autre, et ce, indépendamment de la situation de l'élément de valve expansible.
